# EUROPEAN PATENT APPLICATION

(11) **EP 1 176 694 A1**
(43) Date of publication of application: **30.01.2002**
(21) Application number: 00915482.4
(22) Date of filing: 11.04.2000
(51) Int. Cl.: H02K 3/04, H02K 23/54

(54) **COIL FOR SMALL-SIZED MOTOR AND SMALL-SIZED FLAT MOTOR**

(30) Priority: 12.04.1999 JP 10390399; 22.04.1999 JP 11504699
(71) Applicant: NAMIKI SEIMITSU HOUSEKI KABUSHIKI KAISHA, Tokyo 123-8511 (JP)
(72) Inventor: YASUDA, Hisafumi, Tokyo 123-8511 (JP)
(74) Representative: Kitzhofer, Thomas, Dipl.-Ing.
(86) International application number: JP0002347
(87) International publication number: WO0062401

(57) **Abstract**

A coil so assembled as to be opposed to either a magnet (2) comprising a ring body coaxial with a shaft (1) of an inner rotor at its center or a laminated yoke (3a) comprising a ring body coaxial with the shaft (1) of an outer rotor. A coil (9 or 90) for a small-sized motor is provided winding sections (4a, 4b) facing a peripheral side face (2a) of the ring body (2 or 3a), winding sections (4c, 4d) facing both ring surfaces (2b, 2c), is formed as a hollow wound body in which the winding start ends and winding termination ends are connected continuously, and has a good efficiency of generation of torque. A high-torque small-sized flat motor and a vibration small-sized flat motor are constituted as a motor which is thin as a whole.

## Description

### Background of the Invention

### Field of the Invention

This invention concerns improvement of a coil for a small motor to be mounted in a pager, portable telephone or wrist watch, and of an energy-saving type of small, flat motor that can be used to power such things as electric bicycles.

### Description of Related Art

In the past, the rotors of flat, coreless motors have been assembled with the shaft of the rotor at the center, with coils wound in triangular shape attached at equal intervals concentrically on the wiring board. With these coils in triangular shape, the working radius that produces torque is close to the coil center, and so the torque efficiency is poor, and the inertia of the rotor is great.

In order to provide a longer effective conductor length, it has been proposed that the triangular coils be replaced with coils wound with a portion facing a ring-shaped magnet located on the opposing side of the wiring board; as a small, flat motor with brushes, the ring-shaped magnets could be fixed in a lower housing, with the stator assembled by fixing the shaft in a spindle holder at the center of the lower housing, and having a printed circuit board that constitutes a flat commutator with the coils attached to one side of the board and a commutator element attached to the other side; the printed circuit board is supported by the shaft that rises from the lower housing and is free to turn in its bearing and is covered by the cover housing to make up the rotor side. The commutator element is assembled so that a pair of brushes is fixed to the lower housing extending toward the printed circuit board, and the tip of each brush is in contact with the commutator element (JP Kokai Patent H10-322956).

There are limits to how thin this small, flat motor with brushes can be made, since the printed circuit board with the coils on one side and the commutator element mounted on the other side makes up the commutator, and total thickness must include not just the thickness of the coils, but also the rise of the brushes that extend up to the commutator element from the lower housing. Moreover, the small, flat motor described above can be constituted as a vibratory motor when the motor has a rotor that is a flat, roughly semicircular printed circuit board, with coils wound on the outer edge and folded toward the magnets mounted on the lower housing and the coils wound with multiple layers. If this vibratory motor is built with a small outside diameter, however, the weight of the eccentric weight will be small and the amount of vibration will be diminished. Thus, there are limits to possible reduction of the outside diameter, because of the relationship between that and the amount of vibration. Moreover, the torque production efficiency of the coils is still not adequate.

### Summary of the Invention

This invention has the purpose of providing coils for small motors that maintains good torque production efficiency.

Another purpose of this invention is to provide a small, flat, brushless motor that can be applied to an energy-saving type of power with good torque production efficiency.

Another purpose of this invention is to provide a small, flat, brushless vibratory motor that produces the desired amount of vibration even though the motor is constituted with a small outside diameter.

A further purpose of this invention is to provide a small, flat, brushless motor with brushes that has a very thin overall thickness, primarily because of improvements in the constitution of the commutation mechanism.

Another purpose of this invention is to provide a small, flat, vibratory motor with brushes that produces the desired amount of vibration even though the motor is constituted with a small outside diameter.

The small motor coil of this invention is for use with a ring-shape which is either a ring-type magnet that centers on the shaft of an inner rotor or a ring-type laminated yoke that centers on the shaft of an outer rotor, in which there are first winding portions that face the outer periphery of the ring-shape and second winding portions that face the two circular faces, and which forms a hollow winding that is continuous from the beginning of the winding to the end of the winding.

The small motor coil of this invention comprises multiple coils, such that the first winding portions that faces the ring-shaped periphery matches the curvature of the ring-shaped outer periphery, and the second winding portions that faces the two circular faces are parallel to the center line of the ring-shape in the diametric direction.

The small motor coil of this invention comprises multiple coils, such that the first winding portions that faces the ring-shaped periphery matches the curvature of the ring-shaped outer periphery, and the second winding portions that faces the two circular faces are curved concentrically.

The small motor of this invention is assembled with coils for use with either a ring-shaped magnet centered on the shaft of an inner rotor or a ring-shaped laminated yoke that centers on the shaft of an outer rotor, which have first winding portions that face the ring-shaped outer periphery and second winding portions that face the two circular faces. The coils comprises multiple coils of which the winding is formed as a hollow winding form that is continuous from the beginning of the winding to the end of the winding, assembled on the outer periphery of the ring shape.

The small motor of this invention is assembled with a coil that comprises multiple coils, such that the first winding portions that face the ring-shaped periphery matches the curvature of the ring-shaped outer periphery, and the second winding portions that face the two circular faces are parallel to the center line of the ring-shape in the diametric direction.

The small motor of this invention is assembled with a coil that comprises multiple coils such that the first winding portions that face the ring-shaped periphery match the curvature of the ring-shaped outer periphery, and the second winding portions that face the two circular faces are curved concentrically. The winding of the coils is formed as a hollow winding form that is continuous from the beginning of the winding to the end of the winding, assembled on the outer periphery of the ring shape.

In the small, flat motor with brushes of this invention, there is an outer rotor type small, flat motor with brushes, assembled with a stator assembly having a ring-shaped magnet, a magnet yoke that is fitted in and fixed to the inside diameter of the magnet, a stator support plate that supports the magnet yoke, and a shaft that is fixed to and rises from the center of the stator support plate; a rotor assembly that has a coil located facing the outside of the magnet and separated from the magnet by a gap, a ring-shaped coil yoke that holds the coil in one piece within the yoke, and a rotor support plate that supports the coil including the yoke, with the shaft that is fixed to and rises from the center of the stator support plate inserted into the center of the rotor support plate so that the rotor is supported by and free to turn on the shaft; and a commutator mechanism that has a commutator element that projects from the rotor support plate into the magnet yoke, an axial brush holder that is inserted through the stator support plate at a point near the commutator element inside the magnet yoke, with a brush that extends from the tip of the axis of the brush holder and perpendicular to the axis, such that the brush can be pressed into contact with the commutator element.

The small, flat motor with brushes of this invention is constituted with a cylindrical commutator attached to the rotor bearing that projects into the magnet yoke from the rotor support plate.

In the small, flat motor with brushes of this invention, there is a brush holder that is bent into an L-shape and one end of the brush holder penetrates from the outside to the inside of the stator support plate, holding the brush in a position separated from the commutator element inside the magnet yoke, so that rotating the axis of the brush holder that is outside the stator support plate will cause the entire brush holder to pivot on the other axis, and the brush will be put into contact with the commutator element that projects inside the magnet yoke, thus putting the brush firmly in contact with the commutator element.

In the small, flat motor with brushes of this invention, there is a straight groove on the outer periphery of the stator support plate extending from the position where one axis of the brush holder penetrates toward the edge of the stator support plate, so that by moving the outside axis to rotate the brush holder as a whole around the axis that passes from the outside of the stator support plate to the inside, the brush is pressed against the commutator element that is positioned projecting inside the magnet yoke, and the outside axis of the brush holder can be immobilized in a straight groove on the outside surface of the stator support plate.

The small, flat motor with brushes of this invention is constituted as a vibratory motor by means of an eccentric weight fixed to the outer periphery of the coil yoke.

### Brief Description of the Drawings

Figure 1 is a sectional side view showing a small, flat motor, of the inner-rotor type, of this invention.

Figure 2 is an oblique view showing an example of the coils assembled to make up that motor.

Figure 3 is a plane view showing a small, flat motor assembled with the coils of figure 2.

Figure 4 is an oblique view showing a different coil that can be assembled to make up a small, flat motor of this invention.

Figure 5 is a plane view showing a small, flat motor assembled with the coils of figure 4.

Figure 6 is a sectional side view showing a small, flat motor, of the outer-rotor type, of this invention.

Figure 7 is a sectional side view showing a small, flat motor of this invention, with a different constitution.

Figure 8 is a sectional side view showing a small, flat motor of this invention, with brushes.

Figure 9 is an oblique view showing the stator support plate with which this motor is assembled.

Figure 10 is a plane view showing this motor with the rotor support plate removed.

Figure 11 is a plane view showing that motor.

Figure 12 is a bottom view of that motor.

Figure 13 is a plane view, with the rotor support plate removed, of the motor assembled with the coils of figure 2.

Figure 14 is a plane view, with the rotor support plate removed, of the motor assembled with the coils of figure 4.

Figure 15 is a sectional side view showing a different constitution of the vibratory, small, flat motor with brushes of this invention.

### Detailed Description of the Invention

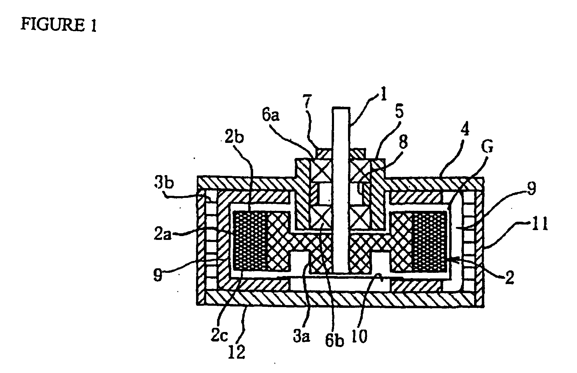

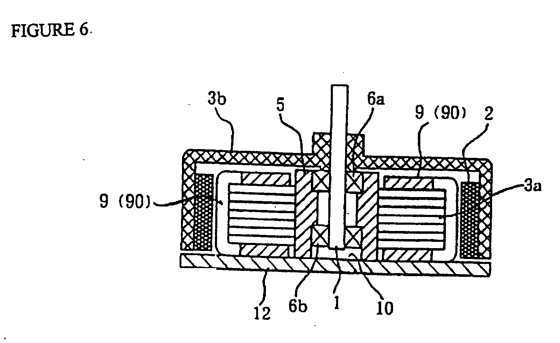

To explain with reference to the attached drawings, the small motors in figures 1, 3, 5, 6 and 7 are constituted as brushless motors. Among these brushless motors, there is the inner rotor type with a ring-type magnet 2 with a shaft 1 at its center, as shown in figure 1, and the outer rotor type with a ring-shaped laminated coil yoke 3a with a shaft 1 at its center, as shown in figure 6.

The inner rotor type is assembled from the primary constituent parts shown in figure 1. The rotor assembly comprises a ring-type magnet 2 which is magnetized in the radial direction, a magnet yoke 3a that is fitted to the inside diameter of the magnet 2, and a shaft 1 that is fitted at the center of the magnet yoke 3a.

This rotor has a cylindrical bearing house 5 with a projecting flange 4 that serves as a cover as well; a pair of bearings 6a, 6b are fitted inside the bearing house 5 and assembled so that the shaft 1 can rotate in the bearings 6a, 6b. Now, the two bearings 6a and 6b are held apart by a spacer ring 8, and the shaft 1 is fixed in place in the bearing 6a by a collar 7.

Apart from this rotor, there is a stator that is assembled having, as its primary constituent parts, multiple coils 9, 9... that face the magnet 2 across a separating magnetic gap G, a laminated ring coil yoke 3b that is fitted outside the coils 9, 9..., and a drive circuit 10 that uses, for example, Hall elements. On the stator side, one surface of the coils 9, 9... is fixed to the inner surface of the projecting flange 4. The coil yoke 3b is accommodated within and held by the external housing 11, and the drive circuit 110 is mounted on the inside surface of the back cover 12.

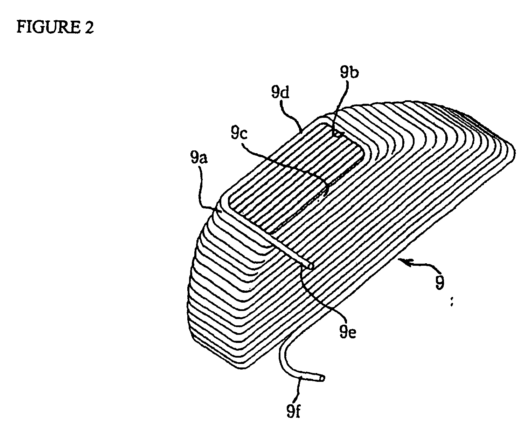

As shown in figures 1 and 2, the coils 9, 9... comprise the first winding portions 9a, 9b that face the outer periphery 20 of the ring-shaped magnet 2 (see figure 1), and the second winding portions 9c, 9d that face its two circular faces 2b, 2c. The first and second winding portions 9a to 9d are continuous from the beginning of the winding 9e to the end of the winding 9f, and are formed as hollow windings.

This coil 9 is an orderly winding of conductive wire such that the coil faces form an approximate quadrilateral, and so the coil9 comprises a crescent of which the first winding portions 9a, 9b that face the outer periphery 2a of the magnet 2 match the curvature of the outer face 2a, and the second winding portions 9c, 9d that fact the two circular faces 2b, 2c are wound parallel to the diametric center line of the magnet 2.

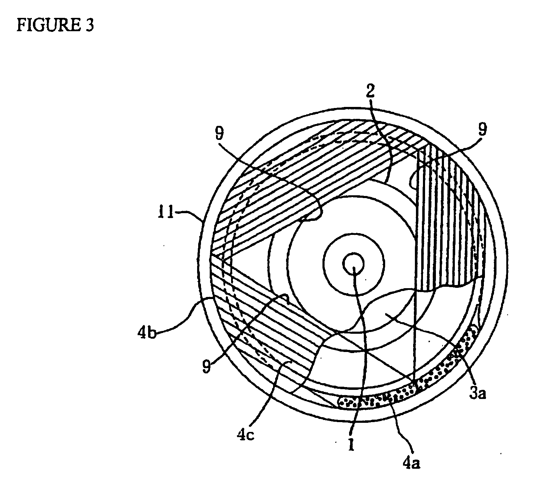

Using these coils 9, 9..., a brushless motor stator is constituted by assembling multiple coils at equal distances around the periphery of the magnet 2, as shown in figure 3. Because the coils 9 are approximate crescent shapes, it is preferable to enclose the periphery of the magnet 2 and maximize the effective area facing the magnet 2 by placing three assemblies separated by 120°.

These coils 9, 9... provide good torque efficiency when the portion that is effective for generating torque is close to the first winding portions 9a, 9b that face the outer periphery 2a of the magnet 2 and the torque action is generated in the direction tangential to the rotation of the rotor. For that reason, providing these coils 9, 9... makes it possible to constitute a small motor of high efficiency.

With this inner rotor type of motor, a relatively heavy magnet yoke 3a can be assembled within a small diameter by placing the yoke3a inside the magnet 2, and so a motor with a rapid response speed can be constituted with a rotor with little inertia. In addition, because the bearing house 5, which contains the bearings 6a, 6b, is placed inside the magnet 2, the motor can be constituted with reduced overall thickness.

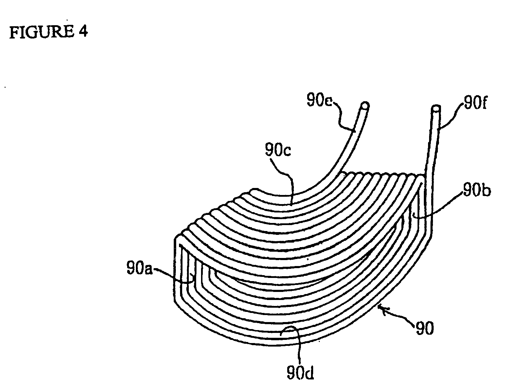

Aside from the crescent-shaped coils 9, 9..., it is possible to use approximately arch-shaped coils formed with multiple windings, as shown in figure 4, in which the first winding portions 90a, 90b that face the outer periphery of the magnet 2 mature the curvature of the outer face of the magnet 2, and the second winding portions 90c, 90d that face the two circular faces 2b, 2c are wound in orderly, concentric arcs. This coil 90 also has first and second winding portions 90a to 90d that are continuous from the beginning of the winding 90e to the end of the winding 90f, and are formed as hollow windings.

These coils 90 also provide good torque efficiency when the portion that is effective for generating torque is close to the first winding portions 90a, 90b that face the outer periphery 2a of the magnet 2 and, as in the case of the crescent-shaped coils shown in figure 2, the torque action is generated in the direction tangential to the rotation of the rotor.

In particular, because in this coil 90 the second winding portions 90c, 90d that face the two circular surfaces have a large component in the radial direction, the torque efficiency is further improved by concentrating the lines of magnetic force spreading from the magnet 2. It is possible, by this means, to make effective use of the motor as an energy-saving type of motor.

With this coil 90, the second winding portions 90c, 90d that return from the first winding portions 90a, 90b are wound to form concentric arcs, the form of the windings can be maintained adequately without overlapping. For this reason, this coil 90 can be formed as a single-layer winding which is thinner in the direction of thrust.

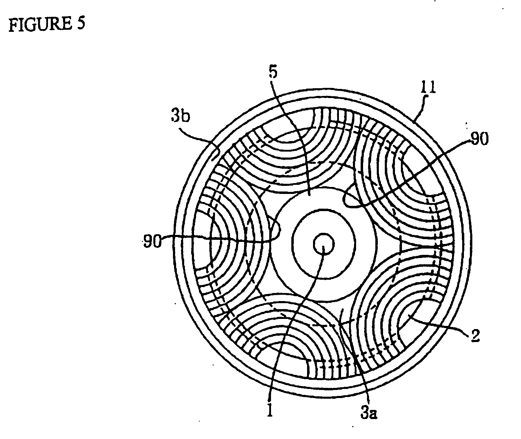

These coils 90, 90... are optimally used to constitute a motor that requires four or more coil segments, as shown in figure 5. By maximizing the effective surface area relative to the magnet 2, it is possible to constitute a small motor of high efficiency, and also to constitute a motor that is thinner in the direction of thrust.

In order to use these coils 9 (90) to constitute motors of the outer rotor type, the stator can be constituted as follows: the coil 9 (90) is fitted around the outside of a laminated ring coil yoke 3 and the drive circuit 10 is on the back cover 12; the cylindrical bearing housing 6 is fitted inside the coil yoke 3a, and the bearing housing 5 is optionally fixed to the inside of the back cover 12; and the shaft 1 is borne by a pair of bearings 6a, 6b that are fitted inside the bearing housing 5.

With respect to this stator, the rotor has a cup-shaped magnet yoke 3b, and the ring-shaped magnet 2 is fitted inside this magnet yoke 3b; the shaft 1 penetrates and is fixed to the magnet yoke 3b, and the stator that includes the coil 9 (90) is accommodated within the housing of the magnet yoke 3b, separated from the magnet 2 by the magnetic gap G.

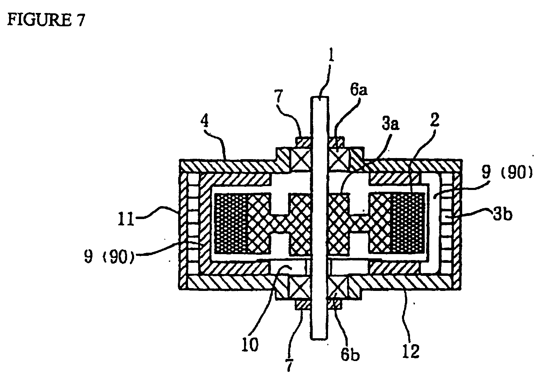

Aside from motors constituted as described above, it is possible to assemble a motor of the inner rotor type by attaching the pair of bearings 6a, 6b that support the shaft 1 to the centers of the front cover 4 and the back cover 12, and eliminating the bearing house, as shown in figure 7. In the figure, the other constituent parts are keyed with the same symbols as the constituent parts shown in figure 1.

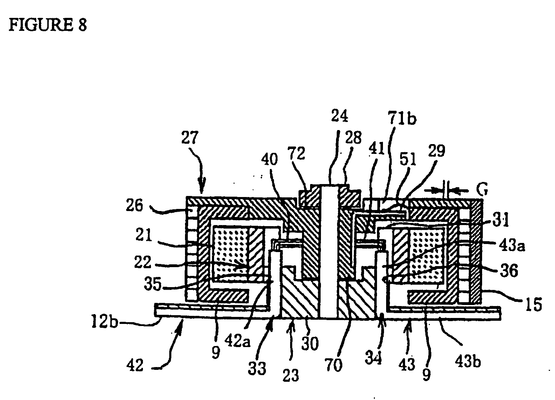

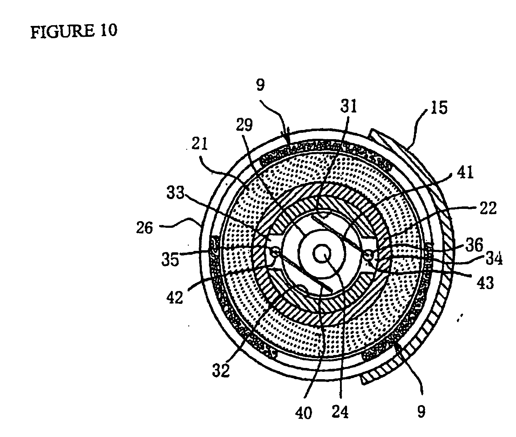

One example of the small, flat motors with brushes shown in figures 8 through 15 is constituted as a vibratory motor of the outer rotor type. In this small, flat motor, as shown in figure 8, the stator is assembled from a ring-type motor 21 with its magnetic field in the radial direction, a magnet yoke 22 that is fitted inside the magnet 21, a stator support plate 23 that holds the stator together, and a shaft 24 that rises from the center of the stator support plate 23.

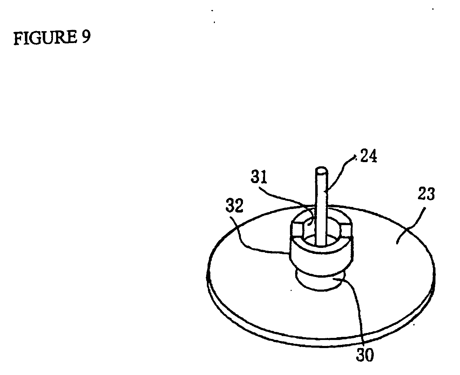

The stator support plate is a molded polymer piece, and as shown in figure 9, the support plate is made with a bearing 30 that holds up the shaft 24, and a split yoke holder 31, 32 that rises above the bearing 30. This stator support plate 23 also serves as a lower housing that constitutes a part of the outer housing; the yoke holder 31, 32 is assembled together with the magnet yoke 22 by fitting inside the magnet yoke 22. The bearing 30 for the shaft 24 of the stator support plate 23 is molded, as described below, to serve also as a brush platform.

Apart from this stator, the rotor is assembled with the coil 9, which is oriented outward and separated from the magnet 21 by a gap G, a ring-shaped coil yoke 26 that is fixed to and supports the inner surface of the coil 9, and a rotor support plate 27 that supports the coil 9 including the coil yoke. Within the constitution of this rotor, the coil 9 is assembled from multiple pieces that are equidistant from the periphery of the magnet 21, and a laminated ring is used as the coil yoke 26.

On the rotor side, the shaft 24 that is fixed to and rises from the center of the stator support plate 23 passes from the center of the rotor support plate 27 through the rotor bearing 70 that is located inside the magnet yoke 22; by this means the shaft 24 is supported and free to turn in the bearing. This rotor support plate 27, like the stator support plate 23, functions as a cover housing that constitutes a part of the external housing. A stop ring 28 that is fixed to the protruding end of the shaft 24 prevents the stop ring28 from coming off.

Between the rotor and the stator there are, as shown in figure 8, a commutator element 29 and a pair of brushes 40, 41 that are assembled as the commutator mechanism. This commutator mechanism has a cylindrical commutator element 29 on the outer periphery of the rotor bearing 70. The brush holders 442, 43 are fixed in a position penetrating the stator support plate 23 close to the commutator element 29, inside the magnet yoke 22, and are assembled so that the brushes 40, 41 that extend perpendicular to the axis tips of the brush holders 42, 43 can be placed in contact with the commutator elements 29.

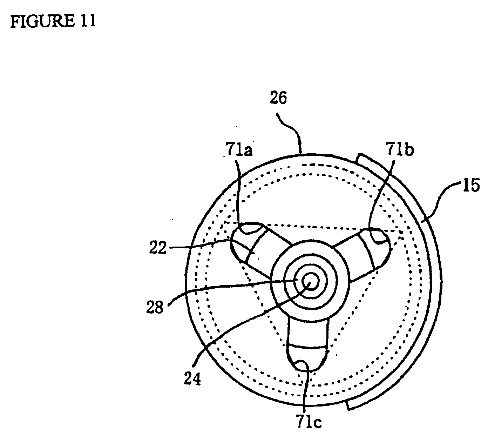

To assemble the motor from the parts constituted as described above, the magnet 21 and the magnet yoke 22 are put together as the preliminary rotor assembly, after which the yoke holder 31, 32 is fitted inside the magnet yoke, and the shaft 24 is fixed in place penetrating the rotor bearing 70; in this way the stator which is preassembled with the brush holders 42, 43 is assembled with the rotor. Also, the terminal 51 of the coil 9 (see figure 8) is connected to the commutator element 29 by means of apertures 71a to 71c in the rotor support plate 27, as shown in figure 11.

In the small, flat motor with brushes constituted in this way, the commutator element 29 is located inside the magnet yoke 22 from the rotor support plate 27, and the brush holders 42, 43 are fixed penetrating the stator support plate 23, inside the magnet yoke 22 near the commutator element 29. Two brushes 40, 41 are located in the axis tips of the brush holders 42, 43 that are next to the commutator element 29, and thus the commutator mechanism is assembled inside the magnet yoke 22. There is no need, therefore, for a large space for the commutator mechanism, and the thickness of the motor as a whole can be reduced, so that the motor is constituted in a thin form.

So that the motor as a whole can be constituted in a thinner form, the projecting face of the bearing 30 that corresponds to the rotor bearing 70 can be formed at a position lower than the rise of the yoke holders 31, 32 that are fitted inside the magnet yoke 22. Moreover, by fitting the stop ring 28 to the protruding end of the shaft 24, a depression 72 can be made in the outer surface of the rotor support plate 27 to accommodate the stop ring 28 so the stop ring28 will hold down the rotor support plate 27.

The brush holders 42, 43 are pipes with their axes bent in an L-shape. The ends 42a, 43a that hold the brushes 40, 41 can be inserted in through-holes 35, 36 into the gaps 33, 34 of the yoke holders 31, 32 from the bearing 30 of the stator support plate 23.

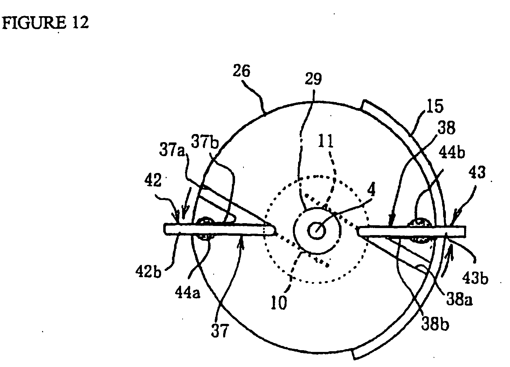

After the ends 42a, 43a of the brush holders 42, 43, which hold the brushes 40, 41 in position separated from the commutator element 29 inside the magnet yoke 22, are inserted from the outside to the inside of the stator support plate 23, the other ends 42b, 43b that are located outside the stator support plate 23 are rotated within the through-holes 35, 36 in the direction shown by the arrows in figure 12 to press the brushes 40, 41 against the commutator 29 located projecting to the inside of the magnet yoke 22.

At the same time, there are straight grooves 37, 38 on the outside surface of the stator support plate 23 that extend from the through holes 35, 36 toward the outer periphery, and the other ends 42b, 43b of the brush holders 42, 43 are turned to a position that forms an acute angle to the parallel positions of the brushes 40, 41; they fill in the straight grooves 37, 38 and are fixed to the outer surface of the stator support plate 23 with adhesive spots 44a, 44b. By this means, the brush holders 42, 43 are firmly fixed to the outer surface of the stator support plate 23.

The straight grooves 37, 38 are formed in V-shapes, with the origins at the through-holes 35, 36, and with legs that are temporary stop grooves 37a, 38a used during assembly, and permanent stop grooves 37b, 38b used after assembly.

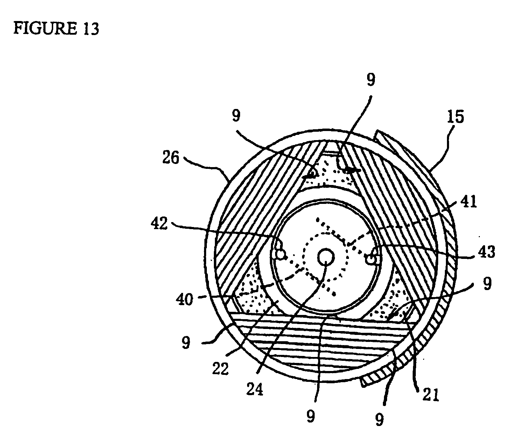

The coil 9, 9... has, as shown in figures 2 and 13, first winding portions 9a, 96 that face the outer periphery of the magnet 21, and second winding portions 9c, 9d that face the two circular surfaces. These winding parts 9a to 9d are a continuous winding from winding beginning 9e to winding end 9f, and form a hollow winding.

This coil 9 is an orderly winding of conductive wire with roughly quadrilateral coil faces, and so the first winding portions 9a, 9b that face the outer periphery of the magnet 21 match the curve of that outer periphery, and the second winding portions 9c, 9d that face the two circular faces are parallel to the center line diameter of the magnet 21; each of the multiple windings is roughly crescent-shaped. Because the coil 9 is formed in crescent shapes, it is desirable to use three at intervals of 120° - in order to enclose the outer periphery of the magnet 21, and to secure the maximum effective area facing the magnet 21.

The portion of the coils 9, 9... that generates torque is near to the first winding portions that faces the outer periphery of the magnet 21, and because the torque efficiency is improved by generating the torque action in the direction of winding with respect to the rotation of the rotor, it is possible to constitute a highly efficient, small, flat motor.

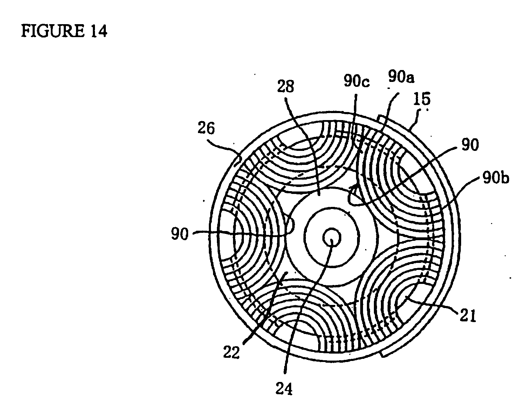

Aside from these crescent-shaped coils 9, 9..., it is possible to use multiple, roughly arch-shaped coils 90, in which the first winding portions 90a, 90b that face the outer periphery of the magnet 21 match the curve of the outer periphery of the magnet 21, and the second winding portions 90c, 90d that face the two circular surfaces are wound in orderly, concentric windings, as shown in figures 4 and 14. In this coil 90, as well, the first and second winding portions 90a to 90d are a continuous winding from the start of winding 9e to the end of winding 9f, and form a hollow winding.

Again in the case of this coil 90, by enclosing the outer periphery of the magnet 21, having the portion that effectively generates torque close to the first winding portions 90a, 90b that face the outer periphery of the magnet 21, the torque efficiency is improved by generating the torque action in the direction of winding with respect to the rotation of the rotor, the same as in the case of the crescent-shapes shown in figure 2. Particularly because the coil 90 has second winding portions 90c, 90d that face the circular surfaces of the magnet 21 and have a large component aligned in the radial direction of the axis, the magnetic lines of force spreading from the magnet 21 are concentrated and it is possible to further improve the torque efficiency.

In this coil 90, the winding portions 90c, 90d that return from first winding portions 90a, 90b are curved concentrically to form the winding, and so the form can be preserved adequately without overlapping the windings. For that reason, the coil 90 can be formed as one that is thin in the direction of thrust by winding in a single layer. Further, this coil 90, 90... is suited to the constitution of a motor that needs a coil in four or more segments. By assuring a large effective area facing the magnet 21, it is possible to constitute a highly efficient, small motor, and a motor that is thin in the direction of thrust.

In this small, flat motor, a semicircular, eccentric weight 15 can be fixed to the outer periphery of the coil yoke 26 to constitute a vibratory motor. Because this eccentric weight 15 is positioned on the outer periphery of the rotor, the eccentric effect and the amount of vibration can be increased even when the diameter of the motor as a whole is small.

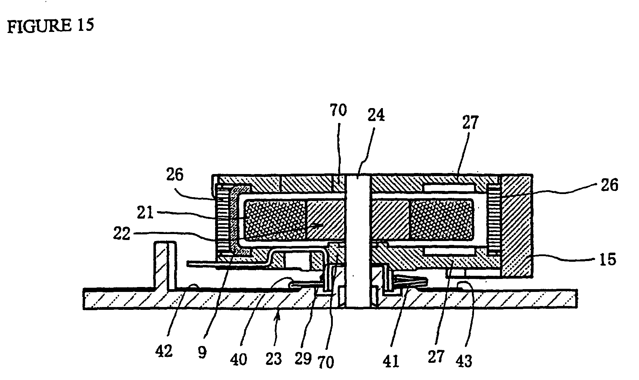

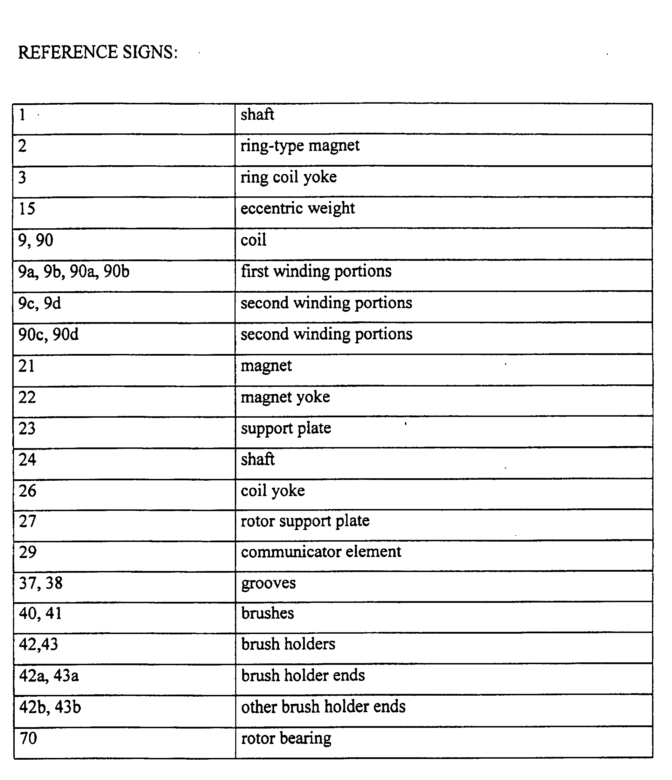

As shown in figure 15, this is a small, flat motor with brushes of the vibratory type having an eccentric weight 15 attached to the outer periphery of the coil yoke 26; in which there is a stator assembly that comprises a ring-shaped magnet 21, a magnet yoke 22 that is fitted inside the magnet, and a fixed shaft 24 that holds the magnet yoke by its center, with the shaft 24 fixed to and rising from the center of the surface of the lower housing 23; a rotor assembly that comprises a coil 9 positioned outside of and facing the magnet 21 and separated from the magnet21 by a gap, a ring-shaped coil yoke 26 that holds the coil 9 as a single unit from within, and a rotor support plate 27 that holds the coil including the coil yoke, all enclosed within the stator assembly, with a rotor bearing 70 centered on the rotor support plate, and supported so that the rotor bearing70 is free to turn on the shaft 24; and a commutator mechanism having a commutator element 29 that projects from the rotor support plate 27 toward the lower housing 23, a brush holder 42 passing through and fixed in the lower housing 23 close to the commutator element 29 with one end of a brush fixed to the brush holder 42, and brushes 40, 41 that bend flexibly so that the unattached ends are able to make contact by brushing against the commutator element 29.

### Industrial Utility

As stated above, in the case of the small motor coil of this invention, the coil is assembled to be paired with a ring-type magnet, either a ring-type magnet that is centered on the shaft of an inner rotor, or a ring-type laminated yoke that is centered on the shaft of an outer rotor. And so the coil has winding portions that face the outer periphery of the ring-type magnet, and second winding portions that face the two circular portions. Because these windings are formed as hollow windings that are continuous from the beginning of the winding to the end of the winding, the portion of the coils that generates torque is near to the first winding portions that faces the outer periphery of the magnet, and because the torque efficiency can be improved by generating the torque action in the direction of winding with respect to the rotation of the rotor.

In the case of the small, flat motor of this invention, the coil is assembled to be paired with a ring-type magnet, either a ring-type magnet that is centered on the shaft of an inner rotor, or a ring-type laminated yoke that is centered on the shaft of an outer rotor. And so the coil has first winding portions that face the outer periphery of the ring-type magnet, and second winding portions that face the two circular portions. Because these windings are formed as hollow windings that are continuous from the beginning of the winding to the end of the winding, the portion of the coils that generates torque is near to the first winding portions that faces the outer periphery of the magnet, and because the torque efficiency can be improved by generating the torque action in the direction of winding with respect to the rotation of the rotor. Particularly because the coil has second winding portions that face the circular surfaces of the magnet and have a large component aligned in the radial direction of the axis, the magnetic lines of force spreading from the magnet are concentrated and it is possible to further improve the torque efficiency.

In the case of the small, flat motor with brushes of this invention, the commutator mechanism is assembled with the commutator element that projects into the magnet yoke from the rotor support plate, the brush holder that penetrates the stator support plate and is fixed to the stator support plate at a point near to the commutator element inside the magnet yoke, and a brush that extends at a perpendicular angle from the axis tip of the brush holder and can be placed in contact with the commutator element. For this reason, no great amount of space is required to mount the commutator mechanism, and so the motor as a whole can be constituted as a thin one.

In the case of the small, flat motor with brushes of this invention, the cylindrical commutator element is attached to the motor bearing that projects into the magnet yoke from the rotor support plate, and by this means it is possible to put the brush that extends at a perpendicular angle from the axis tip of the brush holder firmly in contact with the commutator element.

In the case of the small, flat motor with brushes of this invention, there is a brush holder that is bent into an L-shape, and one end of the brush holder penetrates from the outside to the inside of the stator support plate, holding the brush in a position separated from the commutator element inside the magnet yoke. Because of this, rotating the axis of the brush holder that is outside the stator support plate will cause the entire brush holder to pivot on the other axis, and the brush will be put into contact with the commutator element that projects inside the magnet yoke. In this way, the brush can be put firmly in contact with the commutator element.

In the case of the small, flat motor with brushes of this invention, there is a straight groove in the outside surface of the stator support plate extending from the position where the stator support plate is penetrated by one axis of the brush holder towards the edge of the stator support plate. When the brush holder as a whole is rotated on the axis that penetrates from the outside to the inside of the stator support plate, the brush can be pressed into contact with the commutator element that is positioned projecting to the inside of the magnet yoke, and by fixing the outside axis of the brush holder to a position determined by a straight groove on the outside of the stator support plate, the brush holder can be firmly immobilized on the outside of the stator support plate.

In the case of the small, flat motor with brushes of this invention, fixing the eccentric weight to the outer periphery of the coil yoke positions the eccentric weight on the outer periphery of the rotor, and so even when the outside diameter of the motor as a whole is small, the weight of the eccentric weight can be made greater to increase the amount of vibration.

The words and expressions used in the specification above are intended simply for the purpose of explanation; they do not limit the content of this invention in any way. If any restrictive words or expressions have been used, the intention is not to exclude any part that is equivalent to the various embodiments of the invention explained above. Accordingly, it is clear that it is possible to make various changes within the scope of the invention to which rights have been claimed.

## Claims

1. A small motor coil assembled for use with a ring-shape which is either a ring-type magnet that centers on the shaft of an inner rotor or a ring-type laminated yoke that centers on the shaft of an outer rotor, comprising:
first winding portions that face the outer periphery of the ring-shape,and
second winding portions that face the two circular faces,
wherein the first and second winding portions form a hollow winding that is continuous from the beginning of the winding to the end of the winding.

2. A small motor coil as described in claim 1 above, wherein the first winding portions that faces the outer periphery of the ring-shape matches the curve of the ring shape, and the second winding portions that faces the two circular faces are lined up in parallel to the center line in the diametric direction, and the first and second winding portions are arranged with multiple windings.

3. A small motor coil as described in claim 1 above, wherein the first winding portions that faces the outer periphery of the ring-shape matches the curve of the ring shape, and the second winding portion that faces the two circular faces are concentric arcs, and the first and second winding portions are arranged with multiple windings.

4. A small, flat motor assembled with multiple coils for use with a ring-shape which is either a ring-type magnet that centers on the shaft of an inner rotor or a ring-type laminated yoke that centers on the shaft of an outer rotor, comprising :
first winding portions that face the outer periphery of the ring-shape, and
second winding portions that face the two circular faces,
wherein the first and second winding portions form a hollow winding that is continuous from the beginning of the winding to the end of the winding, with the multiple coils assembled on the outer periphery of the ring-shape.

5. A small, flat motor as described in claim 4 above, comprising:
multiple coils of which the first winding portions that faces the outer periphery of the ring-shape matches the curve of the ring shape, and the second winding portions that faces the two circular faces have multiple windings lined up in parallel to the center line in the diametric direction, with the multiple coils assembled on the outer periphery of the ring-shape.

6. A small, flat motor as described in claim 4 above, comprising:
multiple coils of which the first winding portions that faces the outer periphery of the ring-shape matches the curve of the ring shape, and the second winding portions that faces the two circular faces have multiple windings which are concentric arcs, with the multiple coils assembled on the outer periphery of the ring-shape.

7. An outer rotor type small, flat motor with brushes, comprising:
a stator assembly having a ring-shaped magnet, a magnet yoke that is fitted in and fixed to the inside diameter of the magnet, a stator support plate that supports the magnet yoke, and a shaft that is fixed to and rises from the center of the stator support plate;
a rotor assembly that has a coil located facing the outside of the magnet and separated from the magnet by a gap, a ring-shaped coil yoke that holds the coil in one piece within the yoke, and a rotor support plate that supports the coil including the yoke, with the shaft that is fixed to and rises from the center of the stator support plate inserted into the center of the rotor support plate so that the rotor is supported by and free to turn on the shaft; and
a commutator mechanism that has a commutator element that projects from the rotor support plate into the magnet yoke, an axial brush holder that is inserted and fixed through the stator support plate at a point near the commutator element inside the magnet yoke, with a brush that extends from the tip of the axis of the brush holder and perpendicular to the axis, such that the brush can be pressed into contact with the commutator element.

8. A small, flat motor with brushes as described in claim 7 above, wherein the cylindrical commutator element is attached to a rotor bearing that projects from the rotor support plate into the magnet yoke.

9. A small, flat motor with brushes as described in claim 7 or 8 above, wherein there is a brush holder that is bent into an L-shape and one end of the brush holder penetrates from the outside to the inside of the stator support plate, holding the brush in a position separated from the commutator element inside the magnet yoke, so that moving the other end of the brush holder that is outside the stator support plate will cause the entire brush holder to pivot on the one end , and the brush will be put into contact with the commutator element that projects inside the magnet yoke, thus putting the brush firmly in contact with the commutator element.

10. A small, flat motor with brushes as described in claim 9 above, wherein there is a straight groove on the outer periphery of the stator support plate extending from the position where one end of the brush holder penetrates toward the edge of the stator support plate, so that by moving the other end to rotate the brush holder as a whole around the one end that passes from the outside of the stator support plate to the inside, the brush is pressed against the commutator element that is positioned projecting inside the magnet yoke, and the other end of the brush holder can be immobilized in a straight groove on the outside surface of the stator support plate.

11. An outer rotor type small, flat motor with brushes, comprising:
a stator assembly having a ring-shaped magnet, a magnet yoke that is fitted in and fixed to the inside diameter of the magnet, and a fixed shaft that supports the magnet yoke from its center, the shaft being fixed to and rising from the center of a lower housing ;
a rotor assembly that has a coil located facing the outside of the magnet and separated from the magnet by a gap, a ring-shaped coil yoke that holds the coil in one piece within the yoke, and a rotor support plate that supports the coil including the yoke, wherein a rotor bearing is formed on a center of the rotor support plate, and the rotor bearing is supported so that it is free to turn on the shaft, such that the stator assembly is encompassed by the rotor assembly;
and a commutator mechanism that has a commutator element that projects from the rotor support plate into the lower housing, a plate-shaped brush holder that is inserted through and fixed to the lower housing at a point near the commutator element, with a brush that is fixed to the brush holder on one end, and that bends flexibly so that the other end can be pressed into contact with the commutator element.

12. A vibratory small, flat motor with brushes as described in any of claims 7 to 11 above, wherein an eccentric weight is fixed to the outer periphery of the coil yoke.
